# EUROPÄISCHE PATENTANMELDUNG

(11) **EP 2 295 656 A1**
(43) Veröffentlichungstag der Anmeldung: **16.03.2011**
(21) Anmeldenummer: 10008412.8
(22) Anmeldetag: 12.08.2010
(51) Int. Cl.: E03F 9/00, F16L 3/18, E03F 7/10

(54) **Vorrichtung zur Kanalreinigung**

(30) Priorität: 22.08.2009 DE 102009038582
(71) Anmelder: Wiedemann, Karl, D-86465 Welden (DE)
(72) Erfinder: Wiedemann, Karl, D-86465 Welden (DE)
(74) Vertreter: Munk, Ludwig

(57) **Zusammenfassung**

Bei einer Vorrichtung zur Kanalreinigung mit einem in den zu reinigenden Kanal einführbaren, mit Spülwasser beaufschlagbaren Spülschlauch (10), der auf einer antreibbaren, bzw. abbremsbaren Haspel (9) aufnehmbar und mittels einer von der Haspel getrennten Vorschubeinrichtung (13) in Schlauchlängsrichtung bewegbar ist, lassen sich dadurch eine einfache und kompakte Bauweise sowie ein zwerlässiger Vorschub des Spülschlauchs (10) erreichen und eine einfache Montage der Vorschubeinrichtung (13) auf einem schwenkbaren Ausleger (7) ermöglichen, dass die Vorschubeinrichtung (13) zwei den Spülschlauch (10) flankierende, durch mit Abstand hintereinander angeordnete Rollen (14), die zumindest teilweise antreibbar sind, gebildete Rollenreihen (15a, b) aufweist, die in Schlauchlängsrichtung zumindest um den Rollendurchmesser gegeneinander versetzt sind und quer dazu einen gegenüber dem Spülschlauchdurchmesser verkleinerten Abstand aufweisen.

## Beschreibung

Die Erfindung betrifft eine Vorrichtung zur Kanalreinigung, vorzugsweise ein Kanalreinigungsfahrzeug, mit einem in den zu reinigenden Kanal einführbaren, mit Spülwasser beaufschlagbaren Spülschlauch, der auf einer antreibbaren bzw. abbremsbaren Haspel aufnehmbar und mittels einer von der Haspel getrennten Vorschubeinrichtung in Schlauchlängsrichtung bewegbar ist.

Eine Anordnung dieser Art ist aus der EP 0 829 585 B1 bekannt. Bei dieser bekannten Anordnung ist die Vorschubeinrichtung als vom Spülschlauch wenigstens einmal umschlungene, zweite Haspel ausgebildet. Der mittels einer Hochdruckpumpe mit Spülwasser beaufschlagte Spülschlauch ist erfahrungsgemäß sehr hart. Die zusätzliche Haspel benötigt daher einen vergleichsweise großen Durchmesser und führt infolgedessen zu einer vergleichsweise sperrigen Bauweise. Zudem erweist sich eine derartige Ausbildung der Vorschubeinrichtung bei einer Führung des Spülschlauchs über einen Ausleger als wenig geeignet.

Es wurde auch schon versucht, den Spülschlauch zur Bewerkstelligung einer Vorschubbewegung zwischen zwei einander gegenüberliegenden Reibrädern hindurchzuführen. Eine derartige Anordnung ist zwar platzsparend, aber nicht zuverlässig genug. Außerdem sind hier Probleme beim Durchgang von Schlauchverbindungen zwischen den einander gegenüberliegenden Reibrädern zu befürchten.

Hiervon ausgehend ist es daher die Aufgabe der vorliegenden Erfindung, eine Vorrichtung eingangs erwähnter Art so zu verbessern, dass nicht nur ein zuverlässiger, störungsfreier Vorschub des Spülschlauchs und ein kompakter Aufbau der Vorschubeinrichtung gewährleistet sind, sondern auch ein Verlauf des Spülschlauchs über einen Ausleger ermöglicht wird.

Diese Aufgabe wird erfindungsgemäß dadurch gelöst, dass die Vorschubeinrichtung zwei den Spülschlauch flankierende, durch mit Abstand hintereinander angeordnete Rollen, die zumindest teilweise antreibbar sind, gebildete Rollenreihen aufweist, die in Schlauchlängsrichtung zumindest um den Rollendurchmesser gegeneinander versetzt sind und quer dazu einen gegenüber dem Spülschlauchdurchmesser verkleinerten Abstand aufweisen.

Die erfindungsgemäße Positionierung der Rollen stellt in vorteilhafter Weise sicher, dass der Spülschlauch die erfindungsgemäße Vorschubeinrichtung nach Art einer Wellenlinie durchlaufen muss. Dies ergibt auch bei einem vergleichsweise kleinen Durchmesser der Rollen einen vergleichsweise großen Umschlingungswinkel und damit einen zuverlässigen Vorschub. Der von der zugeordneten Haspel, die zweckmäßig gebremst wird, abziehbare Spülschlauch wird daher zuverlässig gespannt. Hierdurch ist sichergestellt, dass die auf der Haspel aufgenommene Wicklung nicht aufgehen kann. Der gegenseitige Versatz der beiden Rollenreihen stellt zudem sicher, dass auch Schlauchverdickungen, wie Schlauchkupplungen, die erfindungsgemäße Vorschubeinrichtung störungsfrei passieren können. Insgesamt führen die erfindungsgemäßen Maßnahmen zu einer schlanken, langgestreckten Bauweise, so dass eine Montage der erfindungsgemäßen Vorschubeinrichtung auf einem Ausleger ohne weiteres möglich ist, so dass eine Manipulierbarkeit des Spülschlauchs mit Hilfe des Auslegers gewährleistet ist.

Vorteilhafte Ausgestaltungen und zweckmäßige Fortbildungen der übergeordneten Maßnahmen sind in den Unteransprüchen angegeben.

So kann wenigstens einer Rollenreihe vorzugsweise jeder Rollenreihe, jeweils wenigstens ein sie umschlingendes, endloses Umlauforgan zugeordnet sein, das mit seinem der jeweils gegenüberliegenden Rollenreihe zugewandten Trumm am Spülschlauch anliegt. Das Umlauforgan erhöht in vorteilhafter Weise die Kontaktfläche zwischen Vorschubeinrichtung und Spülschlauch, so dass eine besonders zwerlässige Mitnahme des Spülschlauchs erfolgt. Ein weiterer Vorteil ist darin zu sehen, dass mittels des Umlauforgans alle Rollen der zugeordneten Rollenreihe antriebsmäßig miteinander gekuppelt werden. Es genügt daher in vorteilhafter Weise, wenn pro Rollenreihe jeweils nur eine Rolle, zweckmäßig die vorderste Rolle, mit einer Antriebseinrichtung zusammenwirkt.

Eine weitere zweckmäßige Maßnahme kann darin bestehen, dass das Umlauforgan als Zahnriemen ausgebildet ist und dass im Bereich jeder Rollenreihe wenigstens die mittels einer Antriebseinrichtung antreibbare Rolle, bei der es sich zweckmäßig um die vorderste Rolle handelt, als Zahnriemenrolle ausgebildet ist. Die Verzahnung gewährleistet eine formschlüssige Mitnahme des Umlauforgans und damit eine zwerlässige Bewegung des Spülschlauchs.

Zweckmäßig können die Rollen der Rollenreihen einen zu ihrer Mitte hin verjüngten Querschnitt aufweisen. Auch dies wirkt sich vorteilhaft auf die Erhöhung der Kontaktfläche zwischen Vorschubeinrichtung und Spülschlauch aus.

Vorteilhaft sind die beiden Rollenreihen in Längsrichtung um den halben Abstand ihrer Rollen gegeneinander versetzt. Dies erleichtert die seitliche Auslenkung des Spülschlauchs und gewährleistet einen besonders einfachen Durchgang von Schlauchkupplungen.

In einer weiteren Fortbildung der übergeordneten Maßnahmen können alle Rollen zumindest einer Rollenreihe auf einen gemeinsamen Träger aufgenommen sein, der gegenüber der benachbarten Rollenreihe seitlich verschiebbar ist. Hierdurch lässt sich der Seitenabstand der beiden Rollenreihen zwerlässig einstellen. Außerdem lassen sich die beiden Rollenreihen dabei in vorteilhafter Weise auch soweit voneinander entfernen, dass ein bequemer Einzug bzw. ein Einlegen des Spülschlauchs möglich ist.

Gemäß einer weiterer Fortbildung der übergeordneten Maßnahmen kann bei einem Kanal-Reinigungsfahrzeug mit Fahrerkabine und Ausleger dieser über die Fahrerkabine auskragen und die dem Spülschlauch zugeordnete Vorschubeinrichtung und vorzugsweise auch eine einem Saugschlauch zugeordnete Führungseinrichtung aufnehmen. Hierdurch wird eine hohe Arbeitssicherheit gewährleistet, da sich hier das Bedienungspersonal in Fahrtrichtung vor dem Fahrzeug befinden kann, so dass Verletzungen im Falle von Auffahrunfällen vorgebeugt ist.

Weitere vorteilhafte Ausgestaltungen und zweckmäßige Fortbildungen der übergeordneten Maßnahmen sind in den restlichen Unteransprüchen angegeben und aus der nachstehenden Beispielsbeschreibung anhand der Zeichnung näher entnehmbar.

In der nachstehend beschriebenen Zeichnung zeigen:
- Figur 1: eine schematische Seitenansicht eines Kanal-Reinigungsfahrzeugs mit nach vorne auskragendem Ausleger,
- Figur 2: eine schematische Draufsicht auf die dem Spülschlauch zugeord nete, auf dem Ausleger angeordnete Vorschubeinrichtung und
- Figur 3: einen Schnitt entlang der Linie III/III in Figur 1.

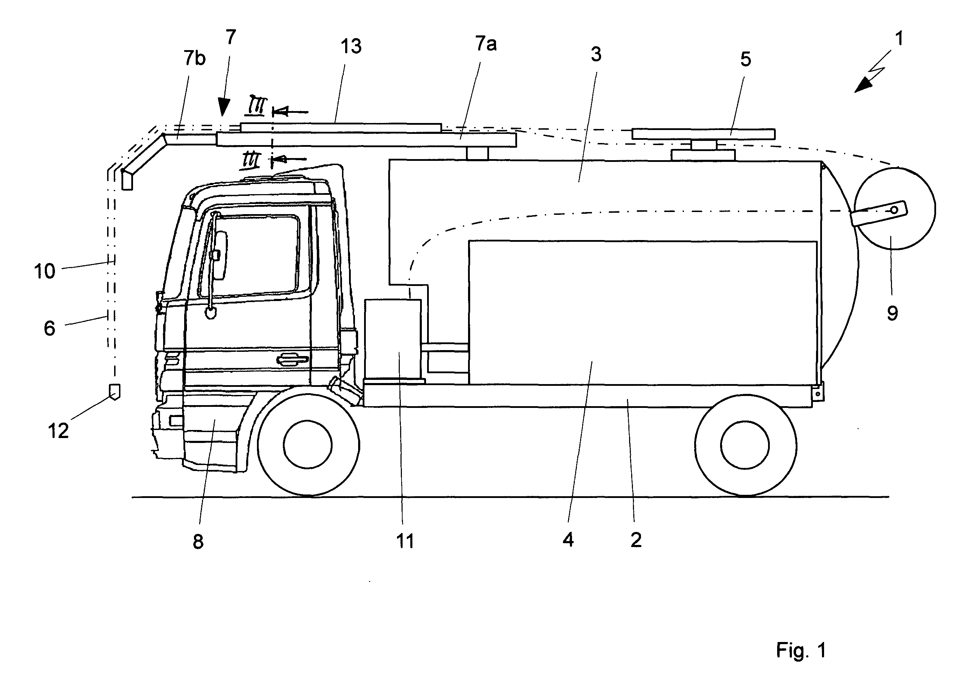

Das der Figur 1 zugrundeliegende Kanal-Reinigungsfahrzeug 1 besteht aus einer fahrbaren Chassis 2 und einem hierauf aufgenommenen Aufbau in Form einer Kanal-Reinigungsvorrichtung. Diese enthält einen fassförmigen, evakuierbaren Schlammabfuhrbehälter 3, der mit einem rückwärtigen Deckel versehen und zum Entleeren vorne hochschwenkbar auf der Chassis 2 angeordnet ist. Der Schlammabfuhrbehälter 3 ist in einer zugeordneten Mulde eines ihn untergreifenden und mit zwei ihn flankierenden Seitenkästen versehenen Spülwassertanks 4 angeordnet. Anstelle eines einteiligen Spülwassertanks 4 könnten selbstverständlich auch zwei seitliche, strömungsmäßig miteinander verbundene Spülwassertanks vorgesehen sein, die den fassförmigen Schlammabfuhrbehälter teilweise untergreifen. Auf dem Schlammabfuhrbehälter 3 ist eine liegende Haspel 5 angeordnet, die als Aufnahmeeinrichtung für einen lediglich durch seine Mittellinie angedeuteten an den Schlammabfuhrbehälter 3 angeschlossenen Saugschlauch 6 bildet, der in den Kanal absenkbar ist. Zum Evakuieren des Schlammabfuhrbehälters 3 ist eine hier nicht näher dargestellte Vakuumpumpe vorgesehen. Der Saugschlauch 6 verläuft über einen schwenkbaren und vorzugsweise teleskopierbaren Ausleger 7. Dieser ist etwa auf der Höhe der vorgeordneten Haspel 5 angeordnet, so dass der Saugschlauch 6 im Bereich zwischen Haspel 5 und Ausleger 7 keine nennenswerte Verformung erfährt. Der Lagerbock des Auslegers 7 ist im dargestellten Beispiel wie die Lagerung der Haspel 5 auf dem Schlammabfuhrbehälter 3 aufgenommen. Selbstverständlich wäre es aber auch denkbar, den Ausleger 7 neben dem Schlammabfuhrbehälter anzuordnen und ihm einen direkt auf die Chassis 2 aufgesetzten Lagerbock zuzuordnen. Der Ausleger 7 kragt im dargestellten Beispiel nach vorne über die Fahrzeugkabine 8 des Kanal-Reinigungsfahrzeugs 1 aus.

Der Aufbau der Chassis 2 enthält ferner eine hier am rückwärtigen Deckel des Schlammabfuhrbehälters 3 angebrachte Haspel 9 für einen in den zu reinigenden Kanal einführbaren Spülschlauch 10. Selbstverständlich wäre auch eine andere Platzierung der Haspel 9, beispielsweise im Zwischenraum zwischen dem Schlammabfuhrbehälter 3 und der Fahrerkabine 8 denkbar. Der Spülschlauch 10 verläuft ebenfalls über den Ausleger 7. Dieser dient dementsprechend zur Manipulation sowohl des Saugschlauchs 6 als auch des Spülschlauchs 10. Der Spülschlauch wird mittels einer auf der Chassis 2 aufgenommenen Hochdruckpumpe 11 mit unter hohem Druck stehendem Spülwasser versorgt. Die Hochdruckpumpe 11 ist durch eine zugeordnete Saugleitung mit dem Spülwassertank 4 verbunden. Dieser kann Frischwasser oder, sofern der Aufbau über eine Wasseraufbereitungseinrichtung verfügt, recyceltes Kanalwasser enthalten.

Zur Reinigung eines Kanals wird der am vorderen Ende mit einer Kanaldüse 12 bestückte Spülschlauch 10 in den Kanal eingeführt und mittels der Hochdruckpumpe 11 mit Spülwasser beaufschlagt. Gleichzeitig wird auch der Saugschlauch 6 in den Kanal abgesenkt und mit Saugzug beaufschlagt. Hierdurch werden die vom Spülwasser gelockerten und weggeschwemmten Verunreinigungen aufgesaugt und in den Schlammabfuhrbehälter 3 eingebracht.

Die Kanaldüse 12 ist so konstruiert, dass im Falle einer Beaufschlagung mit Hochdruck-Spülwasser eine Rückstoßwirkung erzeugt wird, durch welche der Spülschlauch in den Kanal eingezogen wird. Diese Vorschubkraft reicht in der Regel jedoch nicht dazu aus, um den Spülschlauch 10 von der Haspel 9 abzuziehen, die entgegen der Abziehrichtung gebremst wird, um ein Aufgehen der auf der Haspel 9 aufgenommenen Wicklung zu vermeiden. Dem Spülschlauch 10 ist daher eine fahrzeugseitig vorgesehene, in Figur 1 lediglich schematisch angedeutete Vorschubeinrichtung 13 zugeordnet, die den Spülschlauch 10 von der gebremsten Haspel 9 abzieht und in den Kanal befördert, wo die Kanaldüse 12 den weiteren Vorwärtstransport bewerkstelligt.

Die Vorschubeinrichtung 13 ist zweckmäßig auf dem Ausleger 7 angeordnet, über den der Spülschlauch 10 geführt ist. Der Ausleger 7 ist im dargestellten Beispiel teleskopierbar und besteht dementsprechend aus einem auf dem zugeordneten Lagerbock aufgenommenen Basisteil 7a und einem gegenüber diesem ein- und ausfahrbaren Ausfahrteil 7b. Das Basisteil 7a und das Ausfahrteil 7b sind dabei zweckmäßig so gestaltet, dass das Ausfahrteil 7b vollständig oder zumindest weitestgehend in das Basisteil 7a einfahrbar ist, so dass die Sicht aus der Fahrerkabine 8 hierdurch nicht versperrt wird. Das Ausfahrteil 7b besitzt zweckmäßig einen rüsselartig nach unten gerichteten Endbereich, über den der Saugschlauch 6 und der Spülschlauch 10 ablaufen können. Dieser Endbereich besteht zweckmäßig aus mehreren gelenkig miteinander verbundenen, nach Art von Gewölbesteinen geformten Teilstücken, die beim Einfahren des Ausfahrteils 7b in das Basisteil 7a automatisch in eine Streckstellung gelangen und beim Ausfahren von selbst zur Bildung des genannten Rüssels abkippen.

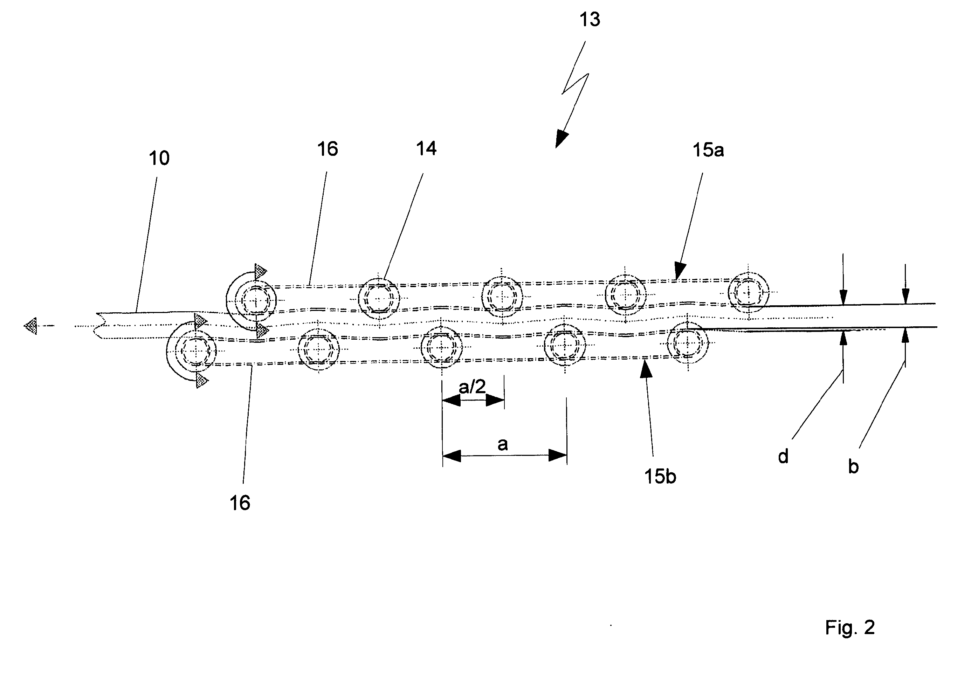

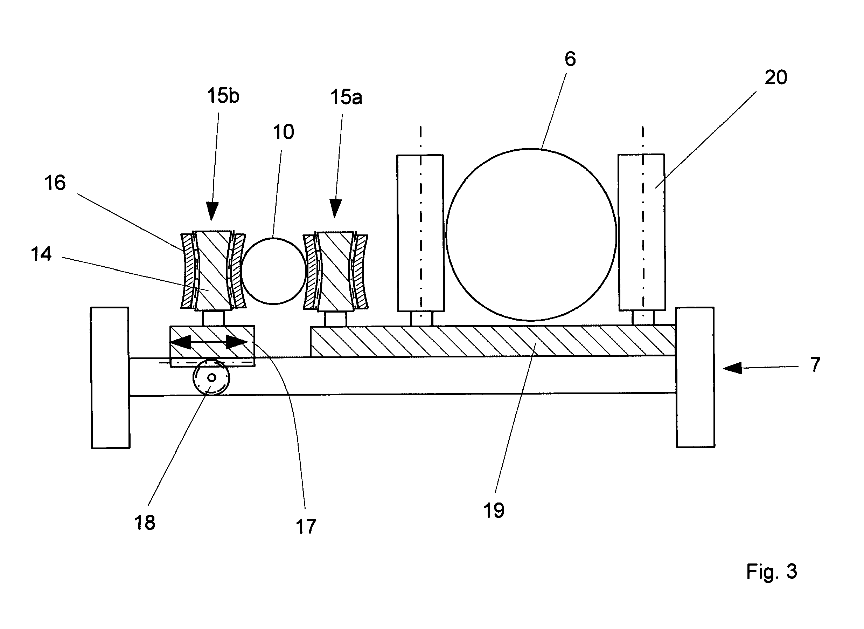

Sofern das Basisteil 7a nach oben offen ist, kann die Vorschubeinrichtung 13 auf dem in das Basisteil 7a einfahrbaren Ausfahrteil 7b angeordnet sein. Im dargestellten Beispiel ist die Vorschubeinrichtung 13 auf dem Basisteil 7a angeordnet. Die Vorschubeinrichtung 13 besteht, wie Figur 2 zeigt, aus zwei den Spülschlauch 10 flankierenden, durch mit gegenseitigem Abstand in Längsrichtung des Spülschlauches 10 hintereinander angeordnete Rollen 14 gebildeten Rollenreihen 15a, b. Die Rollen 14 sind dabei zweckmäßig, wie aus Figur 3 hervorgeht, mit stehender Achse angeordnet, so dass der Zwischenraum zwischen den beiden Rollenreihen 15a, b, von oben zugänglich ist. Die Rollen 14, von denen pro Rollenreihe 15a, b wenigstens eine mittels einer zugeordneten Antriebseinrichtung antreibbar ist, sind in Längsrichtung des Spülschlauchs 10 zumindest um den Rollendurchmesser gegeneinander versetzt. Im dargestellten Beispiel sind die beiden Rollenreihen 15a, b um die Hälfte des Rollenabstands a gegeneinander versetzt, wie in Figur 2 durch Abstandspfeile angedeutet ist. Der gegenseitige Abstand der Rollen 14 ist zweckmäßig über der ganzen Länge der Rollenreihen 15a, b gleich.

Quer zur Längsrichtung der beiden Rollenreihen 15a, b ist der lichte Abstand b zwischen den beiden Rollenreihen 15a, b kleiner als der Durchmesser d des Spülschlauchs 10. Dies bewirkt, dass der Spülschlauch 10 im Bereich zwischen jeweils aufeinanderfolgenden Rollen 14 jeder Rollenreihe 15a, b durch die auf mittleren Abstand gesetzte Rolle 14 der jeweils gegenüberliegenden Rollenreihe seitlich ausgelenkt wird und dementsprechend die Vorschubeinrichtung 13 in Form einer Wellenlinie durchlaufen muss, was eine zuverlässige Vorschubwirkung gewährleistet. Die genannte Auslenkung des Saugschlauchs 10 wird dabei durch den dem halben Rollenabstand entsprechenden, gegenseitigen Versatz der beiden Rollenreihen 15a, b erleichtert. Beim Durchgang einer Verdickung des Spülschlauchs 10 wird die seitliche Auslenkung zwischen zwei aufeinanderfolgenden Rollen einfach automatisch vergrößert. Es ist daher sichergestellt, dass Schlauchkupplungen etc. die Vorschubeinrichtung 13 störungsfrei passieren können.

Zur Steigerung der Vorschubwirkung und zur Schonung des Spülschlauchs 10 ist zumindest einer Rollenreihe, vorzugsweise beiden Rollenreihen 15a, b jeweils ein sie umschlingendes Umlauforgan 16 zugeordnet, das mit seinem der jeweils gegenüberliegenden Rollenreihe zugewandten Trumm an der zugewandten Seitenflanke des Spülschlauchs 10 anliegt. Durch das Umlauforgan 16 werden sämtliche Rollen 14 einer Rollenreihe 15a, b antriebsmäßig miteinander gekoppelt. Es genügt daher, wenn lediglich eine Rolle 14 jeder Rollenreihe 15a, b angetrieben wird. Dabei handelt es sich zweckmäßig um die in Ablaufrichtung vorderste Rolle. Anstelle eines über die ganze Länge der zugeordneten Rollenreihe 15a, b durchgehenden Umlauforgans 16 wäre es auch denkbar, mehrere kürzere Umlauforgane vorzusehen, die jeweils nur einen Teil der Rollen 14 umschlingen, bzw. nur zwei hintereinander angeordnete Rollen 14 miteinander verbinden.

Die Umlauforgane 16 sind zweckmäßig als Zahnriemen ausgebildet. Die angetriebene Rolle 14 jeder Rollenreihe 15a, b ist dementsprechend als Zahnriemenrolle ausgebildet. Bei den übrigen Rollen 14 kann es sich um glatte Rollen mit unverzahntem Umfang handeln. Zweckmäßig kann jedoch zumindest ein Teil dieser Rollen ebenfalls als Zahnriemenrollen ausgebildet sein, um einer Dehnung des Zahnriemens vorzubeugen. Zum Antrieb der antreibbaren Rollen 14, bei denen es sich zweckmäßig um die jeweils vorderste Rolle einer Zahnriemenreihe handelt, kann ein Hydraulikmotor vorgesehen sein. In manchen Fällen kann es zur Verbesserung des Eingriffs der Umlauforgane 16 mit dem Spülschlauch 10 zweckmäßig sein, wenn die Umlauforgane 16 auch auf der dem Spülschlauch 10 zugewandten Seite mit einer vorzugsweise durch eine Verzahnung gebildeten Profilierung versehen sind.

Der Seitenabstand b der beiden Rollenreihen 15a, b ist zweckmäßig veränderbar. Hierdurch ist die Amplitude des wellenförmigen Schlauchverlaufs innerhalb der Vorschubeinrichtung 13 einstellbar. Außerdem ist der seitliche Abstand der beiden Rollenreihen 15a, b soweit vergrößerbar, dass der Saugschlauch 10 von oben einlegbar bzw. nach oben abhebbar ist. Hierzu ist, wie am besten aus Figur 3 ersichtlich ist, eine Rollenreihe, hier die Rollenreihe 15b, auf einem gemeinsamen, über die Rollenreihenlänge durchgehenden Träger 17 aufgenommen, der seitlich verschiebbar gelagert ist und mit einer Stelleinrichtung 18 zusammenwirkt. Dabei kann es sich um einen oder mehrere, pneumatisch oder hydraulisch betätigbare Stellzylinder handeln. Im dargestellten Beispiel ist als Stelleinrichtung 18 ein Zahnritzel 18 angedeutet, das mit einer zugeordneten Verzahnung des Trägers 17 zusammenwirkt. Die Stelleinrichtung 18 kann dabei manuell oder motorisch, beispielsweise mittels eines dem Zahnrad zugeordneten Hydraulikmotors, betätigt werden. Die benachbarte Rollenreihe 15a kann auf einem stationären Träger 19 angeordnet sein, auf dem im dargestellten Beispiel auch dem Saugschlauch 6 zugeordnete Führungsrollen 20 angeordnet sind.

Die Rollen 14 der Rollenreihen 15a, b besitzen zweckmäßig einen doppelkonischen, zu ihrer Mitte hin sich verjüngenden Querschnitt, was den Flächenkontakt mit dem Spülschlauch 10 verbessern kann. Die dem Saugschlauch 6 zugeordneten Führungsrollen 19 sind im dargestellten Beispiel als Zylinderrollen ausgebildet. Aber auch diese könnten einen doppelkonischen Querschnitt aufweisen und bei Bedarf angetrieben sein. Beim Abwickeln des Spülschlauchs 10 von der Haspel 9 werden die Vorschubeinrichtung 13 in Vorschubrichtung angetrieben und die Haspel 9 gebremst, um ein Aufgehen der auf der Haspel 9 aufgenommenen Wicklung zu verhindern. Beim Aufwickeln des Spülschlauchs 10 auf die Haspel 9 wird diese in Aufwickelrichtung angetrieben und die Vorschubeinrichtung 13 entgegen der Aufwickelrichtung gebremst, so dass sich eine straffe Wicklung ergibt. Vielfach genügt hierfür aber bereits der durch das Gewicht des Spülschlauchs 10 bewirkte Zug, so dass die Vorschubeinrichtung 13 einfach im Leerlauf mitbewegt werden kann.

Vorstehend ist ein bevorzugtes Ausführungsbeispiel der Erfindung näher erläutert, ohne dass jedoch hiermit eine Beschränkung verbunden sein soll. Vielmehr stehen dem Fachmann eine Reihe von Möglichkeiten zur Verfügung, um den allgemeinen Gedanken der erfindungsgemäßen Lösung an die Verhältnisse des Einzelfalls anzupassen.

## Patentansprüche

1. Vorrichtung zur Kanalreinigung, vorzugsweise Kanalreinigungsfahrzeug, mit einem in den zu reinigenden Kanal einführbaren, mit Spülwasser beaufschlagbaren Spülschlauch (10), der auf einer antreibbaren, bzw. abbremsbaren Haspel (9) aufnehmbar und mittels einer von der Haspel getrennten Vorschubeinrichtung (13) in Schlauchlängsrichtung bewegbar ist, **dadurch gekennzeichnet, dass** die Vorschubeinrichtung (13) zwei den Spülschlauch (10) flankierende, durch mit Abstand hintereinander angeordnete Rollen (14), die zumindest teilweise antreibbar sind, gebildete Rollenreihen (15a, b) aufweist, die in Schlauchlängsrichtung zumindest um den Rollendurchmesser gegeneinander versetzt sind und quer dazu einen gegenüber dem Spülschlauchdurchmesser verkleinerten Abstand aufweisen.

2. Vorrichtung nach Anspruch 1, **dadurch gekennzeichnet, dass** zumindest einer Rollenreihe (15a, b) wenigstens ein sie umschlingendes, endloses Umlauforgan (16) zugeordnet ist, das mit seinem der jeweils gegenüberliegenden Rollenreihe (15a, b) zugeordneten Trumm am Spülschlauch (10) anliegt.

3. Vorrichtung nach Anspruch 2, **dadurch gekennzeichnet, dass** jeder Rollenreihe (15a, b) wenigstens ein Umlauforgan (16) zugeordnet ist.

4. Vorrichtung nach Anspruch 2 oder 3, **dadurch gekennzeichnet, dass** das Umlauforgan (16) als Zahnriemen ausgebildet ist und dass im Bereich jeder Rollenreihe (15a, b) wenigstens eine Rolle (14), vorzugsweise die in Vorschubrichtung vorderste Rolle (14) als Zahnriemenrolle ausgebildet ist, der eine Antriebseinrichtung zugeordnet ist.

5. Vorrichtung nach einem der Ansprüche 2 bis 4, **dadurch gekennzeichnet, dass** das Umlauforgan (16) auch im Bereich seiner dem Spülschlauch (10) zugewandten Seite profiliert ist, vorzugsweise mit Zähnen versehen ist.

6. Vorrichtung nach einem der vorhergehenden Ansprüche, **dadurch gekennzeichnet, dass** die Rollen (14) der Rollenreihen (15a,b) mit vertikaler Achse angeordnet sind.

7. Vorrichtung nach einem der vorhergehenden Ansprüche, **dadurch gekennzeichnet, dass** die Rollen (14) der Rollenreihen (1 4a, b) einen zu ihrer Mitte hin sich verjüngenden Querschnitt aufweisen.

8. Vorrichtung nach einem der vorhergehenden Ansprüche, **dadurch gekennzeichnet, dass** die beiden Rollenreihen (15a, b) in Längsrichtung um den halben Abstand der Rollen (14) gegeneinander versetzt sind.

9. Vorrichtung nach einem der vorhergehenden Ansprüche, **dadurch gekennzeichnet, dass** der Seitenabstand der beiden Rollenreihen (15a,b) veränderbar ist.

10. Vorrichtung nach Anspruch 9, **dadurch gekennzeichnet, dass** alle Rollen (14) zumindest einer Rollenreihe (15a, b) auf einen gemeinsamen Träger (17) aufgenommen sind, der vorzugsweise mittels einer zugeordneten Verschiebeeinrichtung (18) seitlich verschiebbar ist.

11. Vorrichtung nach einem der vorhergehenden Ansprüche, **dadurch gekennzeichnet, dass** der Spülschlauch (10) über einen schwenkbaren Ausleger (7) geführt ist und dass die zwei einander gegenüberliegende Rollenreihen (15a, b) aufweisende Vorschubeinrichtung (13) dem Ausleger (7) zugeordnet ist.

12. Vorrichtung nach Anspruch 11, **dadurch gekennzeichnet, dass** bei einem Kanalreinigungsfahrzeug (1) mit Fahrerkabine (8) der Ausleger (7) über die Fahrerkabine (8) auskragt.

13. Vorrichtung nach Anspruch 11 oder 12, **dadurch gekennzeichnet, dass** der Ausleger (7) teleskopierbar ist und dass die Vorschubeinrichtung (13) dem Basisteil (7a) des Auslegers (7) zugeordnet ist.

14. Vorrichtung nach einem der Ansprüche 11 bis 13, **dadurch gekennzeichnet, dass** das Ausfahrteil (7b) des teleskopierbaren Auslegers (7) einen rüssePörmig nach unten weisenden, durch gelenkig miteinander verbundene Teilstücke gebildeten Endbereich aufweist.

15. Vorrichtung nach einem der vorhergehenden Ansprüche 11 bis 14, **dadurch gekennzeichnet, dass** ein in den Kanal absenkbarer Saugschlauch (6) vorgesehen ist, der ebenfalls über den Ausleger (7) geführt ist.
